(19) Europäisches Patentamt
European Patent Office
Office européen des brevets

(11) EP 3 852 458 B1

(12) EUROPEAN PATENT SPECIFICATION

(45) Date of publication and mention of the grant of the patent:
**11.06.2025 Bulletin 2025/24**

(21) Application number: **18933385.9**

(22) Date of filing: **10.09.2018**

(51) International Patent Classification (IPC):
***H04W 72/04*** *(2023.01)* ***H04W 72/12*** *(2023.01)*
***H04L 5/00*** *(2006.01)*

(52) Cooperative Patent Classification (CPC):
**H04L 5/001; H04W 72/23;** H04L 5/0053

(86) International application number:
**PCT/JP2018/033507**

(87) International publication number:
**WO 2020/053942 (19.03.2020 Gazette 2020/12)**

# (54) USER TERMINAL AND WIRELESS COMMUNICATION METHOD

BENUTZERENDGERÄT UND DRAHTLOSKOMMUNIKATIONSVERFAHREN

TERMINAL UTILISATEUR, ET PROCÉDÉ DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.07.2021 Bulletin 2021/29**

(73) Proprietor: **NTT DOCOMO, INC.**
**Chiyoda-ku**
**Tokyo 100-6150 (JP)**

(72) Inventors:
- **TAKEDA, Kazuki**
  **Tokyo 100-6150 (JP)**
- **TAKAHASHI, Hideaki**
  **Tokyo 100-6150 (JP)**
- **NAGATA, Satoshi**
  **Tokyo 100-6150 (JP)**
- **WANG, Lihui**
  **Beijing 100190 (CN)**
- **HOU, Xiaolin**
  **Beijing 100190 (CN)**

(74) Representative: **Hoffmann Eitle**
**Patent- und Rechtsanwälte PartmbB**
**Arabellastraße 30**
**81925 München (DE)**

(56) References cited:
**US-A1- 2018 183 551**

- **CATT: "Resource Allocation for PUCCH Format 3", 3GPP DRAFT; R1-105153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450371**
- **NTT DOCOMO: "DL Control Channel Enhancement for DL MIMO in Rel-11", 3GPP DRAFT; R1-111636 DL CONTROL CHANNEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Barcelona, Spain; 20110509, 3 May 2011 (2011-05-03), XP050491272**
- **VIVO: "Remaining issues on PDCCH", 3GPP TSG RAN WG1 #94 R1-1808224, 11 August 2018 (2018-08-11), XP051515609, Retrieved from the Internet <URL:http://www.3gpp.org/ftp/tsg_ran/WG1_RL1/TSGR1_94/Docs/R1-1808224.zip>**
- **NTT DOCOMO, INC: "Offline summary for PDCCH structure and search space", 3GPP TSG RAN WG1 #94 R1-1809855, 23 August 2018 (2018-08-23), XP051517212, Retrieved from the Internet <URL:http://www.3gpp.org/ftp/tsg_ran/WG1_RL1/TSGR1_94/Docs/R1-1809855.zip>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 852 458 B1

- **HUAWEI ET AL.: "NR CA and DC including SRS switching and SUL", 3GPP TSG RAN WG1 #90B R1-1717080, 2 October 2017 (2017-10-02), XP051352186, Retrieved from the Internet <URL:http://www.3gpp.org/ftp/tsg_ran/WG1_RL1/TSGR1_90b/Docs/R1-1717080.zip>**

## Description

### Technical Field

The present disclosure relates to a user terminal and a radio communication method in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.
Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.
In existing LTE systems (for example, LTE Rel. 8 to Rel. 14), a user terminal (UE (User Equipment)) controls reception of a downlink shared channel (for example, a PDSCH (Physical Downlink Shared Channel)), based on downlink control information (also referred to as DCI, a DL assignment, or the like) transmitted on a downlink control channel (for example, a PDCCH (Physical Downlink Control Channel)). The user terminal controls transmission of an uplink shared channel (for example, a PUSCH (Physical Uplink Shared Channel)), based on the DCI (also referred to as a UL grant or the like).
In the 3GPP standard contribution entitled "Resource Allocation for PUCCH Format 3" (R1-105153), the authors disclose details on resource allocation for PUCCH format 3 without and with TxD, and describe an example where only PDSCH on one SCell is scheduled with the corresponding PDCCH on PCell and eNB can configure UE to use the implicit PUCCH format 1a/1b resource on PCell to transmit ACK/NACK.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (hereinafter referred to as NR), it has been studied to detect DCI by monitoring a certain number of downlink control channel candidates (PDCCH candidates) or a set of downlink control channel candidates in a certain range (for example, a search space) of a control resource set has been under study. For example, the UE controls reception of the DCI (or the PDCCH) in the control resource set associated with a configured search space.
In NR, support of scheduling (cross carrier scheduling) between different carriers has been under study. When cross carrier scheduling is applied, scheduling of a physical shared channel of another cell is performed by using the DCI transmitted in a certain cell. In this case, how to control reception processing (for example, monitoring) of the DCI used for scheduling of another cell in the certain cell has not yet been fully studied.
The present disclosure is made in the light of such circumstances as described above, and has an object to provide a user terminal and a radio communication method that can appropriately control reception processing of DCI even when cross carrier scheduling is performed.

### Solution to Problem

The present invention provides a terminal, in accordance with claim 1.
The present invention also provides a radio communication method for a terminal, in accordance with claim 4.
The present invention also provides a base station, in accordance with claim 5.
The present invention also provides a system, in accordance with claim 6.

Advantageous Effects of Invention

According to one aspect of the present disclosure, reception processing of DCI can be appropriately controlled even when cross carrier scheduling is performed.

Brief Description of Drawings

FIG. 1 is a diagram to show an example of search space configuration information in PDCCH configuration information;
FIG. 2 is a diagram to show an example of a configuration of a search space and the number of PDCCH candidates when cross carrier scheduling is applied;
FIG. 3 is a diagram to show an example of cross carrier scheduling;
FIG. 4 is a diagram to show an example of a configuration of a search space and the number of PDCCH candidates when cross carrier scheduling is applied according to a first aspect;
FIG. 5 is a diagram to show an example of a configuration of a search space and the number of PDCCH candidates when cross carrier scheduling is applied according to a second aspect;
FIG. 6 is a diagram to show an example of a schematic structure of a radio communication system according to the present embodiment;
FIG. 7 is a diagram to show an example of an overall structure of a radio base station according to the present embodiment;
FIG. 8 is a diagram to show an example of a functional structure of the radio base station according to the present embodiment;
FIG. 9 is a diagram to show an example of an overall structure of a user terminal according to the present embodiment;
FIG. 10 is a diagram to show an example of a functional structure of the user terminal according to the present embodiment; and
FIG. 11 is a diagram to show an example of a hardware structure of the radio base station and the user terminal according to the present embodiment.

Description of Embodiments

(Search Space)

In NR, the user terminal (UE (User Equipment)) detects DCI by monitoring (performing blind decoding on) a set of one or more search spaces (SSs) (search space set). The search space set includes a set of one or more candidates (PDCCH candidates) of a downlink control channel (for example, a PDCCH (Physical Downlink Control Channel)). In this specification, the "search space set" and the "search space" may be replaced with each other.
The search space set may include a search space set (common search space set (CSS (Common Search Space)) set) used for monitoring of DCI that is common to one or more user terminals (that is specific to a cell), and a search space set (user-specific search space (USS) set) used for monitoring of DCI that is specific to a user terminal.
Each PDCCH candidate in the search space set is configured in the unit of a certain resource, the number of which depends on an aggregation level. The unit of the certain resource may be a control channel element (CCE), a CCE group including one or more CCEs, or the like. Each CCE may include one or more resource elements (REs), one or more resource element groups (REGs), one or more REG bundles (REG groups), or the like. Note that the REG may include one or more REs, and the REG bundle may include one or more REGs.
For example, when the aggregation level is 1, 2, 4, 8, or 16, each PDCCH candidate may be configured in the unit of 1, 2, 4, 8, or 16 consecutive resources (for example, CCEs), respectively.
The search space (or the search space set) may be associated with a control resource set (CORESET). The CORESET may include certain frequency domain resources (for example, a certain number of resource blocks (physical resource blocks (PRBs))) and time domain resources (for example, a certain number of symbols).
The search space set associated with a CORESET p may be defined by using the CCE corresponding to one or more PDCCH candidates in the search space set. For example, for example, the search space set s may include the CCE having an index (index number, index value) indicated by the following expression 1.
[Math. 1]

Expression 1

$$L \cdot \left\{ \left( Y_{p,n^{\mu}_{s,f}} + \left\lfloor \frac{m_{s,n_{CI}} \cdot N_{\mathrm{CCE},p}}{L \cdot M^{(L)}_{p,s,\max}} \right\rfloor + n_{CI} \right) \bmod \lfloor N_{\mathrm{CCE},p} / L \rfloor \right\} + i$$

In expression 1, $Y_{p,n^{\mu}_{s,f}}$ represents a certain parameter, and for example, may be 0 in the CSS set, and may be determined based on a radio network temporary identifier (RNTI) in the USS set. $N_{CCE,p}$ represents the number of CCEs in the CORESET p.

$n_{CI}$ represents a value of a carrier indicator (CI) field when configuration information related to cross carrier scheduling (also referred to as cross carrier scheduling configuration information, CrossCarrierSchedulingConfig, or the like) is configured. On the other hand, $n_{CI}$ is 0 when the cross carrier scheduling configuration information is not configured (in a case of scheduling in the same carrier) or when the CSS set is used.

Note that the cross carrier scheduling configuration information may be reported from the base station to the UE by using higher layer signaling, for example. Here, the higher layer signaling may be, for example, implemented by RRC (Radio Resource Control) signaling, broadcast information (a master information block (MIB), a system information block (SIB), or the like), MAC (Medium Access Control) signaling (for example, a MAC control element (MAC CE)), another signal, or a combination of these.

$m_{s,nCI}$ is 0, ..., $M_{p,s,ncl}^{(L)}$ - 1. $M_{p,s,ncl}^{(L)}$ represents the number of PDCCH candidates configured for the UE to monitor regarding the aggregation level L of a serving cell (cell, carrier, component carrier (CC)) corresponding to $n_{CI}$ and the search space set s.

$M_{p,s,max}^{(L)}$ may be $M_{p,s,0}^{(L)}$ regarding the CSS set, and may be $M_{p,s,ncl}^{(L)}$ which is the largest in all of the values of $n_{CI}$ configured regarding the aggregation level of the search space set s in the CORESET p regarding the USS set.

In this manner, for the UE, the number $M_{p,s,nCI}^{(L)}$ of PDCCH candidates for each aggregation level L of the serving cell corresponding to $n_{CI}$ is configured. The UE monitors the DCI regarding the search space set that is determined based on the number $M_{p,s,ncl}^{(L)}$ of PDCCH candidates.

In a case of scheduling in the same carrier, the number of PDCCH candidates for each aggregation level of a cell (scheduling cell) performing the scheduling may be included in configuration information (search space configuration information, SearchSpace) related to the search space set. The search space configuration information may be included in configuration information (PDCCH configuration information, PDCCH-Config) related to the PDCCH. At least one of the search space configuration information and the PDCCH configuration information may be reported to the UE by using higher layer signaling.

FIG. 1 is a diagram to show an example of the search space configuration information in the PDCCH configuration information. As shown in FIG. 1, in the PDCCH configuration information (PDCCH-Config), a certain number of (for example, a maximum of 10) lists (search space list, SearchSpaceToAddModList) of the search space configuration information (SearchSpace) may be included. Note that the present configuration information is merely an example, and this is not restrictive. For example, the number of search space lists may be more than or less than 10, parameters different from those in FIG. 1 may be added (or parameters may be deleted) in the search space configuration information (SearchSpace), or the format of values and parameters that each parameter can have may be different from that of FIG. 1.

Each piece of search space configuration information (SearchSpace) may include information indicating at least one of an identifier of the search space (or the search space set) (search space ID, SearchSpaceID), an identifier of the CORESET associated with the search space (CORESET ID, controlResourceSetId), information indicating a period and an offset for monitoring the search space (monitoringSlotPeriodicityAndOffset), a period of the search space, the number of symbols in a slot (monitoringSymbolWithinSlot), and the number of PDCCH candidates for each aggregation level in the search space (nofCandidates).

Incidentally, when the PDSCH is received by using a plurality of cells (or CCs) (for example, CA), it is conceivable that reception processing (for example, monitoring of the PDCCH candidates or the like) of the PDSCH in each cell is controlled by configuring the search space configuration information for each cell. In this case, in the search space configuration information corresponding to each cell, it is assumed that the number of PDCCH candidates for each AL is separately (independently) configured. The control resource set corresponding to the search space of each cell may be configured.

For example, regarding the search space configured for the first cell and the search space configured for the second cell, the number of PDCCH candidates (or the number of PDCCH candidates in each AL) is configured separately from each other. With this configuration, the number of PDCCH candidates to be monitored by the UE for each search space of each cell can be flexibly configured. Note that the index of the search space configured for each cell may be the same (for example, index s (#s)), or may be different.

On the other hand, when cross carrier scheduling is configured, the DCI indicating scheduling of the PDSCH in the second cell may be transmitted in the first cell. The first cell may be referred to as a cell or a scheduling cell performing scheduling, and the second cell may be referred to as a scheduled cell.

In this case, when reception processing such as monitoring of the DCI for PDSCH scheduling of the second cell (DCI for the second cell) is performed in the first cell, how to perform control poses a problem.

From the point of view that the UE flexibly controls the number of PDCCH candidates to be monitored for each cell (or prevents the number of PDCCH candidates from increasing), it is preferable that reception processing of the DCI for the second cell (number of PDCCH candidates to be monitored or the like) in the first cell be determined based on the number of PDCCH candidates corresponding to the search space configured for the second cell.

For example, in detection of the DCI for the scheduled cell, the number of PDCCH candidates of each AL to be monitored in search space #s of the BWP of the scheduling cell may be determined based on a configuration of search space #s configured for the BWP of the scheduled cell. With this configuration, even when cross carrier scheduling is performed, when the DCI is received in the scheduling cell, the number of PDCCH candidates to be monitored for each cell can be individually configured (see FIG. 2).

On the other hand, when cross carrier scheduling is applied, how to control the configuration of the control resource set (for example, CORESET-specific configuration) corresponding to each search space poses a problem. The configuration of the control resource set may be at least one of allocation of the frequency domain of the control resource set (frequency-domain RA), the number of symbols (number of symbols), whether or not interleaving is applied (interleaved/non-interleaved), and whether or not a TCI state is configured (TCI-state enabled/disabled).

For example, a case in which the DCI indicating scheduling of the PDSCH in the first cell is transmitted in the first cell is assumed. In such a case, it is only necessary that the UE perform monitoring of the search space (or the PDCCH candidates) in the control resource set corresponding to the search space configured for the first cell.

In contrast, a case in which the DCI indicating scheduling of the PDSCH in the second cell is transmitted in the first cell is assumed. In such a case, how to configure the control resource set for receiving the DCI for the second cell in the first cell poses a problem. For example, when the configuration of the control resource set corresponding to the search space configured for the second cell (for example, configuration different from that of the control resource set for the first cell) is applied in monitoring of the first cell, the configuration of the control resource set may not be able to be appropriately applied in the first cell.

In the light of this, the inventors of the present invention came up with the idea of controlling reception processing (for example, monitoring) of the downlink control information for the scheduled cell transmitted in the scheduling cell, based on the configuration the same as that of the control resource set configured to correspond to the search space for the scheduling cell in cross carrier scheduling.

The present embodiment will be described below in detail with reference to the drawings. Each aspect described below may be used individually, or may be used in combination as appropriate. Note that, in the following description, as the cross carrier scheduling configuration information, CrossCarrierSchedulingConfig in ServingCellConfig is used. However, this is merely an example, and any information may be used as long as the information is configuration information related to cross carrier scheduling.

(First Aspect)

In the first aspect, when cross carrier scheduling is configured, the UE applies the configuration of the control resource set corresponding to the search space of the scheduling cell as the configuration of the control resource set corresponding to the search space of the scheduled cell.

FIG. 3 shows an example of a case in which cross carrier scheduling is applied between the first cell (hereinafter also referred to as cell #A) and the second cell (hereinafter also referred to as cell #B). The cell may be a CC. Specifically, FIG. 3 shows a case in which the first DCI (DCI #1) transmitted in cell #A schedules the PDSCH of cell #A (self scheduling) and a case in which the second DCI (DCI #2) schedules the PDSCH of cell #B (cross carrier scheduling).

A network (for example, the base station) configures a search space in cell #A or an active DL BWP of cell #A. For example, the base station transmits the search space configuration information corresponding to cell #A to the UE by using higher layer signaling (for example, RRC signaling) or the like. The search space configuration information may include information indicating at least one of an ID of the search space (for example, search space #s), an ID of a certain control resource set associated with the search space, information indicating a period and an offset for monitoring the search space (monitoringSlotPeriodicityAndOffset), a period of the search space, the number of symbols in a slot (monitoringSymbolWithinSlot), the number of PDCCH candidates of each aggregation level in the search space (nofCandidates).

The base station may transmit information related to the configuration of a certain control resource set (CORESET-specific configuration) corresponding to search space #s to the UE by using higher layer signaling or the like. The configuration of the control resource set may be at least one of allocation of the frequency domain of the control resource set, the number of symbols, whether or not interleaving is applied, and whether or not a TCI state is configured.

With this configuration, the UE can recognize search space #s configured for cell #A or the active DL BWP of cell #A, the control resource set corresponding to the search space, the configuration of the control resource set, the number of PDCCH candidates to be monitored in the search space, and the like.

The UE controls reception processing of the DCI (DCI for cell #A) used for scheduling of the PDSCH of cell #A or the active DL BWP of cell #A, based on the search space associated with cell #A or the active DL BWP of cell #A and the information related to the control resource set configuration transmitted from the base station (see FIG. 4). For example, the UE attempts to receive the DCI for cell #A or the active DL BWP of cell #A by performing as many times of monitoring as the number of PDCCH candidates corresponding to the search space regarding the search space that is mapped in the control resource set configured from the base station in cell #A or the active DL BWP of cell #A.

The base station configures a search space in cell #B or an active DL BWP of cell #B. For example, the base station transmits the search space configuration information corresponding to cell #B or the active DL BWP of cell #B to the UE by using higher layer signaling (for example, RRC signaling) or the like. The search space configuration information corresponding to cell #B or the active DL BWP of cell #B may include information indicating at least one of an ID of the search space corresponding to cell #B or the active DL BWP of cell #B (for example, search space #s), an ID of a certain control resource set associated with the search space, information indicating a period and an offset for monitoring the search space, a period of the search space, and the number of symbols in a slot, the number of PDCCH candidates of each aggregation level in the search space.

The number of PDCCH candidates corresponding to the search space configured for cell #B or the active DL BWP of cell #B may be configured separately from (or independently of) the number of PDCCH candidates corresponding to the search space configured for cell #A or the active DL BWP of cell #A. With this configuration, the number of PDCCH candidates corresponding to the search space configured for cell #A or the active DL BWP of cell #A and the number of PDCCH candidates corresponding to the search space configured for cell #B or the active DL BWP of cell #B can be configured to be either different values or the same value.

The UE may associate (or refer to) the control resource set corresponding to the search space configured for cell #A or the active DL BWP of cell #A as the control resource set corresponding to the search space configured for cell #B or the active DL BWP of cell #B. In other words, the UE controls reception processing of the DCI for cell #B or the active DL BWP of cell #B, based on the configuration of the control resource set corresponding to the search space configured for cell #A or the active DL BWP of cell #A (see FIG. 4). In this case, the UE may apply the same control resource set configuration between the cells for the search space having the same index (for example, search space #s).

For example, the UE assumes that the search space configured for cell #B or the active DL BWP of cell #B is mapped in the control resource set corresponding to the search space of cell #A or the active DL BWP of cell #A in cell #A or the active DL BWP of cell #A. Further, the UE attempts to receive the DCI for the second cell by performing as many times of monitoring as the number of PDCCH candidates corresponding to the search space configured for cell #B or the active DL BWP of cell #B.

The control resource set corresponding to the search space configured for cell #B or the active DL BWP of cell #B may be controlled so as not to be configured. In this case, the base station may perform control so as not to configure the control resource set associated with the search space configured for a cell (scheduled cell) whose scheduling is controlled with DCI of another cell in cross carrier scheduling. When cross carrier scheduling is configured, the UE may assume that the control resource set associated with the search space in the scheduled cell is not configured.

Alternatively, when the control resource set corresponding to the search space configured for cell #B or the active DL BWP of cell #B is configured, the UE may ignore the control resource set, and may control reception processing of the DCI for the second cell, based on the control resource set corresponding to the search space of cell #A.

When the search space (for example, the search space having the same index) is configured for each of the cell performing scheduling and the scheduled cell as described above, the same configuration (for example, the configuration of the control resource set configured for the scheduling cell) is applied as the configuration of the control resource set corresponding to the search space. With this configuration, even when cross carrier scheduling is applied, reception processing (for example, monitoring of the PDCCH candidates or the like) of the DCI can be appropriately performed.

The PDCCH candidates can be flexibly configured for each cell or each active DL BWP of each cell by controlling monitoring of the DCI for each cell, based on the number of PDCCH candidates corresponding to the search space configured for each cell or each active DL BWP of each cell in cross carrier scheduling.

(Second Aspect)

In the second aspect, when cross carrier scheduling is configured, the control resource set corresponding to the search space of the active DL BWP of the scheduled cell and the control resource set corresponding to the search space of the active DL BWP of the scheduling cell are configured to have the same configuration.

FIG. 3 shows an example of a case in which cross carrier scheduling is applied between the first cell (cell #A) or the active DL BWP of cell #A and the second cell (cell #B) or the active DL BWP of cell #B. The cell may be a CC. Specifically, FIG. 3 shows a case in which the first DCI (DCI #1) transmitted in cell #A or the active DL BWP of cell #A schedules the PDSCH of cell #A or the active DL BWP of cell #A (self scheduling) and a case in which the second DCI (DCI 2) schedules the PDSCH of cell #B or the active DL BWP of cell #B (cross carrier scheduling).

A network (for example, the base station) configures a search space in cell #A, cell #B, or the active DL BWP in each of the cells. For example, the base station transmits the search space configuration information corresponding to each cell to the UE by using higher layer signaling (for example, RRC signaling) or the like.

The search space configuration information may include information indicating at least one of an ID of the search space (for example, search space #s), an ID of a certain control resource set associated with the search space, information indicating a period and an offset for monitoring the search space (monitoringSlotPeriodicityAndOffset), a period of the search space, the number of symbols in a slot (monitoringSymbolWithinSlot), the number of PDCCH candidates of each aggregation level in the search space (nofCandidates).

The number of PDCCH candidates corresponding to the search space configured for cell #A or the active DL BWP of cell #A and the number of PDCCH candidates corresponding to the search space configured for cell #B or the active DL BWP of cell #B may be separately (or independently) configured.

The base station may transmit information related to the configuration of a certain control resource set (CORESET-specific configuration) corresponding to the search space of each cell to the UE by using higher layer signaling or the like. The configuration of the control resource set may be at least one of allocation of the frequency domain of the control resource set, the number of symbols, whether or not interleaving is applied, and whether or not a TCI state is configured.

With this configuration, the UE can recognize search space #s configured for each cell, the control resource set corresponding to the search space, the configuration of the control resource set, the number of PDCCH candidates to be monitored in the search space, and the like.

The base station configures the same configuration for the control resource set corresponding to the search space of cell #A or the active DL BWP of cell #A and the control resource set corresponding to the search space of cell #B or the active DL BWP of cell #B. The UE may assume that the same control resource set configuration is configured for the search space of each cell (for example, the search space having the same index). In other words, the UE may assume that different control resource set configurations are not configured for the search space of each cell (for example, the search space having the same index).

The UE controls reception processing of the DCI for the first cell, based on the search space associated with cell #A or the active DL BWP of cell #A and the information related to the control resource set configuration transmitted from the base station (see FIG. 5). For example, the UE attempts to receive the DCI for the first cell by performing as many times of monitoring as the number of PDCCH candidates corresponding to the search space regarding the search space that is mapped within the range of the control resource set configured for cell #A or the active DL BWP of cell #A in cell #A or the active DL BWP of cell #A.

The UE controls reception processing of the DCI for the second cell, based on the search space associated with cell #B or the active DL BWP of cell #B and the information related to the control resource set configuration transmitted from the base station (see FIG. 5). For example, the UE attempts to receive the DCI for the second cell by performing as many times of monitoring as the number of PDCCH candidates corresponding to the search space regarding the search space that is mapped within the range of the control resource set configured for cell #B or the active DL BWP of cell #B in cell #A or the active DL BWP of cell #A.

When the search space (for example, the search space having the same index) is configured for each of the cell performing scheduling and the scheduled cell as described above, the control resource set having the same configuration is configured for each search space. With this configuration, even when cross carrier scheduling is applied, reception processing (for example, monitoring of the PDCCH candidates or the like) of the DCI can be appropriately performed.

The PDCCH candidates can be flexibly configured for each cell by controlling monitoring of the DCI for each cell, based on the number of PDCCH candidates corresponding to the search space configured for each cell in cross carrier scheduling.

Note that FIG. 5 shows a case in which all of the parameters (for example, allocation of the frequency domain of the control resource set, the number of symbols, whether or not interleaving is applied, whether or not a TCI state is configured, and the like) included in the configuration of the control resource set are configured to be the same for the active DL BWP of each of cell #A and cell #B, but this is not restrictive. For example, a part of the parameters included in the configuration of the control resource set may be configured to be the same, and other parameters may be separately configured. With this configuration, the configuration of the control resource set can be flexibly controlled for each cell.

(Third Aspect)

In the third aspect, when cross carrier scheduling is configured, information (or a parameter) related to the number of PDCCH candidates (for example, nrofCandidates) of each AL is included in the cross carrier scheduling configuration information. The UE may determine the number of PDCCH candidates of each AL in the scheduled cell, based on the number of PDCCH candidates included in the cross carrier scheduling configuration information.

Specifically, when cross carrier scheduling is configured, the parameter for specifying the number of PDCCH candidates of each AL included in the search space configuration information is used in a case where the candidates of the PDCCH for scheduling the PDSCH for the active DL BWP of the scheduling cell are monitored. On the other hand, when the candidates of the PDCCH for scheduling the PDSCH for the active DL BWP of the scheduled cell different from the scheduling cell are monitored, information (or a parameter) related to the number of PDCCH candidates (for example, nrofCandidates) of each AL is used in the cross carrier scheduling configuration information.

When the UE receives the cross carrier scheduling configuration information transmitted from the base station, the UE may control reception of the DCI by determining a cell ID to be the scheduled cell and the number of PDCCH candidates of each AL configured for the scheduled cell, based on the configuration information. The base station may transmit the cell ID to be the scheduled cell and the number of PDCCH candidates of each AL to the UE by including the cell ID and the number of PDCCH candidates in the cross carrier scheduling configuration information.

Alternatively, the search space ID of the scheduled cell may be configured in the cross carrier scheduling configuration information, and the number of PDCCH candidates of each AL may be configured for the search space ID. In this case, the number of PDCCH candidates of each AL configured for the search space ID may be configured in the cross carrier scheduling configuration information, or may be configured in an information element different from the configuration information (for example, an information element related to the search space).

Information related to the search space ID of the scheduling cell may be included in the cross carrier scheduling configuration information configured for the scheduled cell.

In this case, the number of PDCCH candidates of each AL of the scheduled cell configured for the cross carrier scheduling configuration information may be applied to the search space ID included in the cross carrier scheduling configuration information. When the certain search space ID is included in the cross carrier scheduling configuration information, the PDCCH candidates for the scheduled cell may be monitored only in the search space having the ID, or the number of candidates different from the number of PDCCH candidates for the scheduling cell may be able to be configured in the cross carrier scheduling configuration information only in the search space having the ID. With this configuration, the PDCCH candidates for cross carrier scheduling can be more flexibly configured.

Alternatively, the number of PDCCH candidates of each AL of the scheduled cell configured for the cross carrier scheduling configuration information may be applied to all of the search spaces in the scheduling cell when cross carrier scheduling is applied. This configuration eliminates the need of specifying the search space ID, and thus allows for reduction of signaling overhead.

In this manner, by including information related to the PDCCH candidates in the cross carrier scheduling configuration information, reporting of the number of PDCCH candidates for the scheduled cell to be monitored in the schedule cell can be appropriately performed when cross carrier scheduling is applied.

(Radio Communication System)

Hereinafter, a structure of a radio communication system according to the present embodiment will be described. In this radio communication system, the radio communication method according to each embodiment of the present disclosure described above may be used alone or may be used in combination for communication.

FIG. 6 is a diagram to show an example of a schematic structure of the radio communication system according to the present embodiment. In the radio communication system 1, carrier aggregation (CA) and/or dual connectivity (DC), in which a plurality of component carriers (carriers or cells) are aggregated, can be applied.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a base station 11 that forms a macro cell C1 of a relatively wide coverage, and base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the base station 11 and the base stations 12. It is assumed that the user terminals 20 use the macro cell C1 and the small cells C2 at the same time by means of CA or DC. The user terminals 20 can execute CA or DC by using a plurality of cells (CCs).

The radio communication system 1 may support dual connectivity (multi-RAT dual connectivity (MR-DC)) between a plurality of RATs (Radio Access Technologies). The MR-DC may include dual connectivity (EN-DC (E-UTRA-NR Dual Connectivity)) of LTE and NR in which the base station (eNB) of LTE (E-UTRA) serves as a master node (MN) and the base station (gNB) of NR serves as a secondary node (SN), dual connectivity (NE-DC (NR-E-UTRA Dual Connectivity)) of NR and LTE in which the base station (gNB) of NR serves as the MN and the base station (eNB) of LTE (E-UTRA) serves as the SN, and the like. The radio communication system 1 may support dual connectivity between a plurality of base stations in the same RAT (for example, dual connectivity (NN-DC (NR-NR Dual Connectivity)) where both of an MN and an SN are base stations (gNB) of NR).

Between the user terminals 20 and the base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the base stations 12, a carrier of a relatively high frequency band (for example, 3.5 GHz, 5 GHz, and so on) and a wide bandwidth may be used, or the same carrier as that used between the user terminals 20 and the base station 11 may be used. Note that the structure of the frequency band for use in each base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

Numerologies may be communication parameters applied to transmission and/or reception of a certain signal and/or channel, and for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on. For example, if certain physical channels use different subcarrier spacings of the OFDM symbols constituted and/or different numbers of the OFDM symbols, it may be referred to as that the numerologies are different.

A wired connection (for example, means in compliance with the CPRI (Common Public Radio Interface) such as an optical fiber, an X2 interface and so on) or a wireless connection may be established between the base station 11 and the base stations 12 (or between two base stations 12).

The base station 11 and the base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each base station 12 may be connected with the higher station apparatus 30 via the base station 11.

Note that the base station 11 is a base station having a relatively wide coverage, and may be referred to as a "macro base station," a "central node," an "eNB (eNodeB)," a "transmitting/receiving point" and so on. The base stations 12 are base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the base stations 11 and 12 will be collectively referred to as "base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/-NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

<Base Station>

FIG. 7 is a diagram to show an example of an overall structure of the base station according to the present embodiment. A base station 10 includes a plurality of transmitting/receiving antennas 101, amplifying sections 102, transmitting/receiving sections 103, a baseband signal processing section 104, a call processing section 105 and a communication path interface 106. Note that the base station 10 may be configured to include one or more transmitting/receiving antennas 101, one or more amplifying sections 102 and one or more transmitting/receiving sections 103.

User data to be transmitted from the base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the base station 10, manages the radio resources and so on.

The communication path interface 106 transmits and/or receives signals to and/or from the higher station apparatus 30 via a certain interface. The communication path interface 106 may transmit and/or receive signals (backhaul signaling) with other base stations 10 via an inter-base station interface (for example, an optical fiber in compliance with the CPRI (Common Public Radio Interface) and an X2 interface).

FIG. 8 is a diagram to show an example of a functional structure of the base station according to the present embodiment. Note that, the present example primarily shows functional blocks that pertain to characteristic parts of the present embodiment, and it is assumed that the base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the base station 10, and some or all of the structures do not need to be included in the baseband signal processing section 104.

The control section (scheduler) 301 controls the whole of the base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), and a downlink control signal (for example, a signal transmitted on the PDCCH and/or the EPDCCH, such as transmission confirmation information). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH, such as transmission confirmation information), random access preamble (for example, a signal transmitted on the PRACH), an uplink reference signal, and so on.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

Note that the transmitting/receiving section 103 transmits, in a certain cell, the downlink control information indicating scheduling of the downlink shared channel of another cell.

The control section 301 controls transmission of the downlink control information, based on the configuration the same as that of the control resource set configured to correspond to the search space for the certain cell. For example, when the respective search spaces having the same index (for example, search spaces #s) are configured for the certain cell and such another cell, the control section 301 controls transmission of the downlink control information indicating scheduling of the PDSCH of such another cell, based on the configuration the same as that of the control resource set configured to correspond to search space #s for the certain cell.

The control section 301 may control transmission of the downlink control information in the certain cell, based on the number of downlink control channel candidates configured for the search space of such another cell. The control section 301 may independently configure the number of downlink control channel candidates corresponding to the search space of the certain cell and the number of downlink control channel candidates corresponding to the search space of such another cell.

<User Terminal>

FIG. 9 is a diagram to show an example of an overall structure of the user terminal according to the present embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

FIG. 10 is a diagram to show an example of a functional structure of a user terminal according to the present embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the base station 10, from the received signal processing section 404. The control section 401 controls generation of an uplink control signal and/or an uplink data signal, based on the results of determining necessity or not of retransmission control to a downlink control signal and/or a downlink data signal.

The control section 401 may control monitoring of the DCI that is subjected to CRC scrambling using a certain identifier (for example, at least one of a C-RNTI, a CS-RNTI, an MCS-C-RNTI, an SI-RNTI, a P-RNTI, an RA-RNTI, a TC-RNTI, an INT-RNTI, an SFI-RNTI, a TPC-PUSCH-RNTI, a TPC-PUCCH-RNTI, a TPC-SRS-RNTI, and an SP-CSI-RNTI).

If the control section 401 acquires a variety of information reported by the base station 10 from the received signal processing section 404, the control section 401 may update parameters to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

Note that the transmitting/receiving section 203 receives, in a certain cell, the downlink control information indicating scheduling of the downlink shared channel of another cell.

The control section 401 may control reception of the downlink control information indicating scheduling of the downlink shared channel of such another cell, based on the configuration the same as that of the control resource set configured to correspond to the search space for the certain cell. For example, when the respective search spaces having the same index (for example, search spaces #s) are configured for the certain cell and such another cell, the control section 401 controls reception of the downlink control information indicating scheduling of the PDSCH of such another cell, based on the configuration the same as that of the control resource set configured to correspond to search space #s for the certain cell.

The control section 401 may control reception of the downlink control information in the certain cell, based on the number of downlink control channel candidates configured for the search space of such another cell. The number of downlink control channel candidates corresponding to the search space of the certain cell and the number of downlink control channel candidates corresponding to the search space of such another cell may be independently configured.

The control section 401 may ignore the control resource set configured to correspond to the search space of such another cell, or may assume that no control resource set is configured to correspond to the search space of such another cell. Alternatively, the control section 401 may assume that the control resource set configuration configured to correspond to the search space of such another cell is the same as the configuration of the control resource set corresponding to the search space of the certain cell.

<Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the one piece of apparatus described above or the plurality of pieces of apparatus described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used.

For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004. In the transmitting/receiving section 103 (203), the transmitting section 103a (203a) and the receiving section 103b (203b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an ASIC (Application-Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, codewords, or the like or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably.

In the present disclosure, the terms such as "precoding," a "precoder," a "weight (precoding weight)," "quasi-co-location (QCL)," a "TCI state (Transmission Configuration Indication state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNodeB (eNB)," a "gNodeB (gNB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms such as "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an IoT (Internet of Things) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, next-generation systems that are enhanced based on these, and so on. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

## Claims

**1.** A terminal (20) comprising:

a receiving section (203) configured to receive a first configuration information regarding a search space for monitoring downlink control information in a first cell, and a second configuration information corresponding to a second cell; and
a control section (401) configured to control, based on the first configuration information, reception of a downlink control information that indicates scheduling of a physical downlink shared channel of the second cell, the reception of the downlink control information being carried out in the first cell,
wherein a control resource set, corresponding to a search space for the second cell, is not configured in the second configuration information corresponding to the second cell.

**2.** The terminal (20) according to claim 1, wherein the control section (401) is configured to control the reception of the downlink control information based on a control resource set, configured to correspond to a search space for the first cell, in the first configuration information.

**3.** The terminal (20) according to claim 1 or 2, wherein the receiving section (203) is configured to receive a third configuration information regarding a search space for the first cell, and to receive a fourth configuration information regarding a search space for the second cell,
wherein search space for the second cell is configured with a same index as an index of the search space for the first cell.

**4.** A radio communication method for a terminal (20) comprising:

receiving a first configuration information regarding a search space for monitoring downlink control information in a first cell, and a second configuration information corresponding to a second cell; and
controlling, based on the first configuration information, reception of a downlink control information that indicates scheduling of a physical downlink shared channel of the second cell, the reception of the downlink control information being carried out in the first cell,
wherein a control resource set, corresponding to a search space for the second cell, is not configured in the second configuration information corresponding to the second cell.

**5.** A base station (10) comprising:

a transmitting section (103) configured to transmit a first configuration information regarding a search space for monitoring downlink control information in a first cell, and a second configuration information corresponding to a second cell; and
a control section (301) configured to control transmission of a downlink control information that indicates scheduling of a physical downlink shared channel of the second cell,
wherein the downlink control information is received, in the first cell by a terminal (20), based on the first configuration information,
wherein the control section (301) does not configure a control resource set, corresponding to a search space for the second cell, in the second configuration information corresponding to the second cell.

**6.** A system comprising a terminal (20) and a base station (10), wherein:

the terminal (20) comprises:

a receiving section (203) configured to receive a first configuration information regarding a search space for monitoring downlink control information in a first cell, and a second configuration information corresponding to a second cell; and
a control section (401) configured to control, based on the first configuration information, reception of a downlink control information that indicates scheduling of a physical downlink shared channel of the second cell, the reception of the downlink control information being carried out in the first cell, and

the base station (10) comprises:

a transmitting section (103) configured to transmit the first configuration information; and
a control section (301) configured not to configure a control resource set, corresponding to a search space for the second cell, in the second configuration information corresponding to the second cell.

## Patentansprüche

1. Endgerät (20), umfassend:

einen Empfangsabschnitt (203), der konfiguriert ist, um erste Konfigurationsinformationen bezüglich eines Suchraums zum Überwachen von Downlink-Steuerinformationen in einer ersten Zelle und zweite Konfigurationsinformationen, die einer zweiten Zelle entsprechen, zu empfangen; und
einen Steuerabschnitt (401), der konfiguriert ist, um basierend auf den ersten Konfigurationsinformationen den Empfang von Downlink-Steuerinformationen zu steuern, die die Planung eines physischen gemeinsam genutzten Downlink-Kanals der zweiten Zelle anzeigen, wobei der Empfang der Downlink-Steuerinformationen in der ersten Zelle ausgeführt wurde,
wobei ein Steuerressourcensatz, der einem Suchraum für die zweite Zelle entspricht, nicht in den zweiten Konfigurationsinformationen, die der zweiten Zelle entsprechen, konfiguriert ist.

2. Endgerät (20), nach Anspruch 1, wobei der Steuerabschnitt (401) konfiguriert ist, um den Empfang der Downlink-Steuerinformationen basierend auf einem Steuerressourcensatz zu steuern, der konfiguriert ist, um einem Suchraum für die erste Zelle in den ersten Konfigurationsinformationen zu entsprechen.

3. Endgerät (20), nach Anspruch 1 oder 2, wobei der Empfangsabschnitt (203) konfiguriert ist, um dritte Konfigurationsinformationen bezüglich eines Suchraums für die erste Zelle zu empfangen und vierte Konfigurationsinformationen bezüglich eines Suchraums für die zweite Zelle zu empfangen,
wobei der Suchraum für die zweite Zelle mit einem gleichen Index konfiguriert ist wie ein Index des Suchraums für die erste Zelle.

4. Funkkommunikationsverfahren für ein Endgerät (20), umfassend:

Empfangen von ersten Konfigurationsinformationen bezüglich eines Suchraums zur Überwachung von Downlink-Steuerinformationen in einer ersten Zelle und zweiten Konfigurationsinformationen, die einer zweiten Zelle entsprechen; und
Steuern, basierend auf den ersten Konfigurationsinformationen, des Empfangs von Downlink-Steuerinformationen, die die Planung eines physischen gemeinsam genutzten Downlink-Kanals der zweiten Zelle anzeigen, wobei der Empfang der Downlink-Steuerinformationen in der ersten Zelle ausgeführt wurde,
wobei ein Steuerressourcensatz, der einem Suchraum für die zweite Zelle entspricht, nicht in den zweiten Konfigurationsinformationen, die der zweiten Zelle entsprechen, konfiguriert ist.

5. Basisstation (10), umfassend:

einen Sendeabschnitt (103), der konfiguriert ist, um erste Konfigurationsinformationen bezüglich eines Suchraums zum Überwachen von Downlink-Steuerinformationen in einer ersten Zelle und zweite Konfigurationsinformationen, die einer zweiten Zelle entsprechen, zu senden; und
einen Steuerabschnitt (301), der konfiguriert ist, um das Senden von Downlink-Steuerinformation, die die Planung eines physischen gemeinsam genutzten Downlink-Kanals der zweiten Zelle anzeigen, zu steuern,
wobei die Downlink-Steuerinformationen in der ersten Zelle von einem Endgerät (20) empfangen werden, basierend auf den ersten Konfigurationsinformationen,

wobei der Steuerabschnitt (301) in den zweiten Konfigurationsinformationen, die der zweiten Zelle entsprechen, keinen Steuerressourcensatz konfiguriert, der einem Suchraum für die zweite Zelle entspricht.

**6.** System umfassend ein Endgerät (20) und eine Basisstation (10), wobei:

das Endgerät (20) Folgendes umfasst:

einen Empfangsabschnitt (203), der konfiguriert ist, um erste Konfigurationsinformationen bezüglich eines Suchraums zum Überwachen von Downlink-Steuerinformationen in einer ersten Zelle und zweite Konfigurationsinformationen, die einer zweiten Zelle entsprechen, zu empfangen; und
einen Steuerabschnitt (401), der konfiguriert ist, um basierend auf den ersten Konfigurationsinformationen den Empfang von Downlink-Steuerinformationen zu steuern, die die Planung eines physischen gemeinsam genutzten Downlink-Kanals der zweiten Zelle anzeigen, wobei der Empfang der Downlink-Steuerinformationen in der ersten Zelle ausgeführt wurde, und

die Basisstation (10) Folgendes umfasst:

einen Sendeabschnitt (103), der konfiguriert ist, um die ersten Konfigurationsinformationen zu senden; und
einen Steuerabschnitt (301), der konfiguriert ist, um in den zweiten Konfigurationsinformationen, die der zweiten Zelle entsprechen, keinen Steuerressourcensatz zu konfigurieren, der einem Suchraum für die zweite Zelle entspricht.

## Revendications

**1.** Terminal (20) comprenant :

une section de réception (203) configurée pour recevoir une première information de configuration concernant un espace de recherche permettant de surveiller des informations de commande de liaison descendante dans une première cellule, et une deuxième information de configuration correspondant à une seconde cellule ; et
une section de commande (401) configurée pour commander, sur la base de la première information de configuration, la réception d'une information de commande de liaison descendante qui indique une programmation d'un canal partagé en liaison descendante physique de la seconde cellule, la réception de l'information de commande de liaison descendante étant réalisée dans la première cellule,
dans lequel un ensemble de ressources de commande, correspondant à un espace de recherche pour la seconde cellule, n'est pas configuré dans la deuxième information de configuration correspondant à la seconde cellule.

**2.** Terminal (20) selon la revendication 1, dans lequel la section de commande (401) est configurée pour commander la réception de l'information de commande de liaison descendante sur la base d'un ensemble de ressources de commande, configuré pour correspondre à un espace de recherche pour la première cellule, dans la première information de configuration.

**3.** Terminal (20) selon la revendication 1 ou 2, dans lequel la section de réception (203) est configurée pour recevoir une troisième information de configuration concernant un espace de recherche pour la première cellule, et pour recevoir une quatrième information de configuration concernant un espace de recherche pour la seconde cellule,
dans lequel l'espace de recherche pour la seconde cellule est configuré avec un même index qu'un index de l'espace de recherche pour la première cellule.

**4.** Procédé de radiocommunication pour un terminal (20) comprenant :

la réception d'une première information de configuration concernant un espace de recherche permettant de surveiller des informations de commande de liaison descendante dans une première cellule, et d'une deuxième information de configuration correspondant à une seconde cellule ; et
la commande, sur la base de la première information de configuration, de la réception d'une information de commande de liaison descendante qui indique une programmation d'un canal partagé en liaison descendante physique de la seconde cellule, la réception de l'information de commande de liaison descendante étant réalisée dans la première cellule,

dans lequel un ensemble de ressources de commande, correspondant à un espace de recherche pour la seconde cellule, n'étant pas configuré dans la deuxième information de configuration correspondant à la seconde cellule.

**5.** Station de base (10) comprenant :

une section de transmission (103) configurée pour transmettre une première information de configuration concernant un espace de recherche permettant de surveiller des informations de commande de liaison descendante dans une première cellule, et une deuxième information de configuration correspondant à une seconde cellule ; et
une section de commande (301) configurée pour commander la transmission d'une information de commande de liaison descendante qui indique une programmation d'un canal partagé en liaison descendante physique de la seconde cellule,
dans laquelle l'information de commande de liaison descendante est reçue, dans la première cellule par un terminal (20), sur la base de la première information de configuration,
dans laquelle la section de commande (301) ne configure pas un ensemble de ressources de commande, correspondant à un espace de recherche pour la seconde cellule, dans la deuxième information de configuration correspondant à la seconde cellule.

**6.** Système comprenant un terminal (20) et une station de base (10), dans lequel :

le terminal (20) comprend :

une section de réception (203) configurée pour recevoir une première information de configuration concernant un espace de recherche permettant de surveiller des informations de commande de liaison descendante dans une première cellule, et une deuxième information de configuration correspondant à une seconde cellule ; et
une section de commande (401) configurée pour commander, sur la base de la première information de configuration, la réception d'une information de commande de liaison descendante qui indique une programmation d'un canal partagé en liaison descendante physique de la seconde cellule, la réception de l'information de commande de liaison descendante étant réalisée dans la première cellule, et

la station de base (10) comprend :

une section de transmission (103) configurée pour transmettre la première information de configuration ; et
une section de commande (301) configurée pour ne pas configurer un ensemble de ressources de commande, correspondant à un espace de recherche pour la seconde cellule, dans la deuxième information de configuration correspondant à la seconde cellule.

```
BWP-DownlinkDedicated ::=            SEQUENCE {
    pdcch-Config                         SetupRelease { PDCCH-Config }
            OPTIONAL,    -- Need M
    pdsch-Config                         SetupRelease { PDSCH-Config }
            OPTIONAL,    -- Need M
    sps-Config                           SetupRelease { SPS-Config }
            OPTIONAL,    -- Need M
    radioLinkMonitoringConfig            SetupRelease { RadioLinkMonitoringConfig }
            OPTIONAL,    -- Need M
    ...
}

PDCCH-Config ::=                     SEQUENCE {
    controlResourceSetToAddModList       SEQUENCE(SIZE (1..3)) OF ControlResourceSet
        OPTIONAL,    -- Need N
    controlResourceSetToReleaseList      SEQUENCE(SIZE (1..3)) OF ControlResourceSetId
        OPTIONAL,    -- Need N
    searchSpacesToAddModList             SEQUENCE(SIZE (1..10)) OF SearchSpace
        OPTIONAL,    -- Need N
    searchSpacesToReleaseList            SEQUENCE(SIZE (1..10)) OF SearchSpaceId
        OPTIONAL,    -- Need N
    downlinkPreemption                   SetupRelease { DownlinkPreemption }
        OPTIONAL,    -- Need M
    tpc-PUSCH                            SetupRelease { PUSCH-TPC-CommandConfig }
        OPTIONAL,    -- Need M
    tpc-PUCCH                            SetupRelease { PUCCH-TPC-CommandConfig }
        OPTIONAL,    -- Cond PUCCH-CellOnly
    tpc-SRS                              SetupRelease { SRS-TPC-CommandConfig}
        OPTIONAL,    -- Need M
    ...
}
SearchSpace ::=                          SEQUENCE {
    searchSpaceId                            SearchSpaceId,
    controlResourceSetId                     ControlResourceSetId
                    OPTIONAL,    -- Cond SetupOnly
    monitoringSlotPeriodicityAndOffset       CHOICE {
        sl1                                      NULL,
        sl2                                      INTEGER (0..1),
        sl4                                      INTEGER (0..3),
        sl5                                      INTEGER (0..4),
        sl8                                      INTEGER (0..7),
        sl10                                     INTEGER (0..9),
        sl16                                     INTEGER (0..15),
        sl20                                     INTEGER (0..19),
        sl40                                     INTEGER (0..39),
        sl80                                     INTEGER (0..79),
        sl160                                    INTEGER (0..159),
        sl320                                    INTEGER (0..319),
        sl640                                    INTEGER (0..639),
        sl1280                                   INTEGER (0..1279),
        sl2560                                   INTEGER (0..2559)
    }
                    OPTIONAL,    -- Cond Setup
    duration                                 INTEGER (2..2559)
                    OPTIONAL,    -- Need R
    monitoringSymbolsWithinSlot              BIT STRING (SIZE (14))
                    OPTIONAL,    -- Cond Setup
    nrofCandidates                           SEQUENCE {
        aggregationLevel1                        ENUMERATED {n0, n1, n2, n3, n4, n5, n6, n8},
        aggregationLevel2                        ENUMERATED {n0, n1, n2, n3, n4, n5, n6, n8},
        aggregationLevel4                        ENUMERATED {n0, n1, n2, n3, n4, n5, n6, n8},
        aggregationLevel8                        ENUMERATED {n0, n1, n2, n3, n4, n5, n6, n8},
        aggregationLevel16                       ENUMERATED {n0, n1, n2, n3, n4, n5, n6, n8}
    }
                    OPTIONAL,    -- Cond Setup

    OPTIONAL,    -- Cond Setup
```

FIG. 1

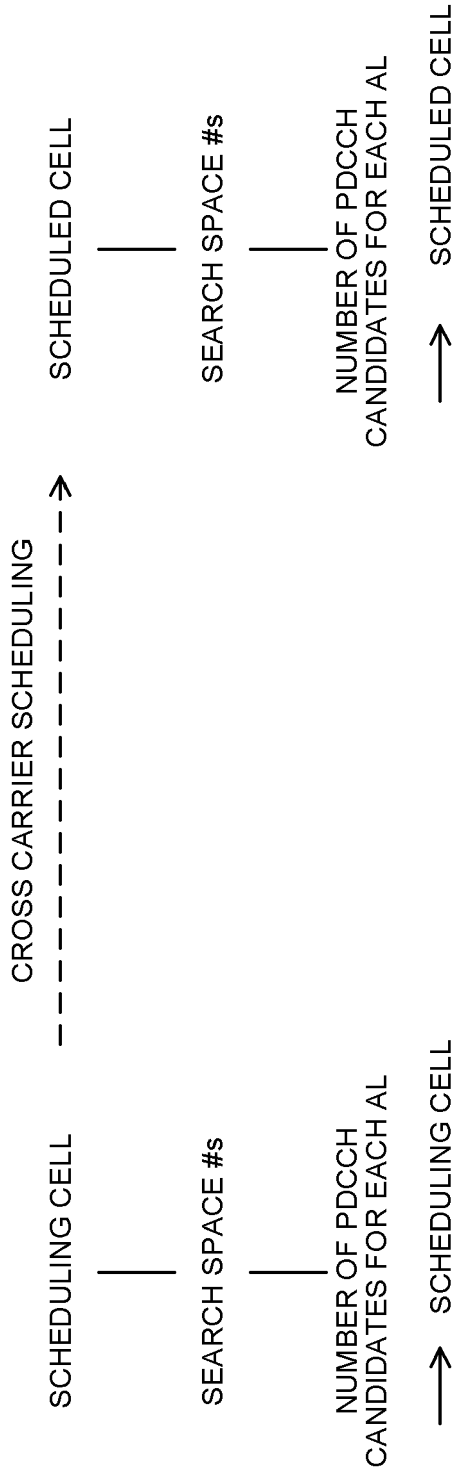
SCHEDULING CELL
SEARCH SPACE #s
NUMBER OF PDCCH CANDIDATES FOR EACH AL
SCHEDULING CELL
CROSS CARRIER SCHEDULING
SCHEDULED CELL
SEARCH SPACE #s
NUMBER OF PDCCH CANDIDATES FOR EACH AL
SCHEDULED CELL

FIG. 2

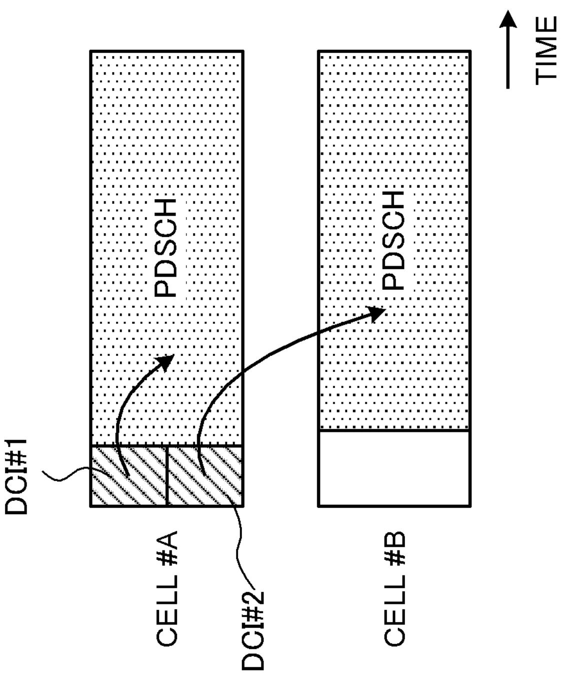


FIG. 3

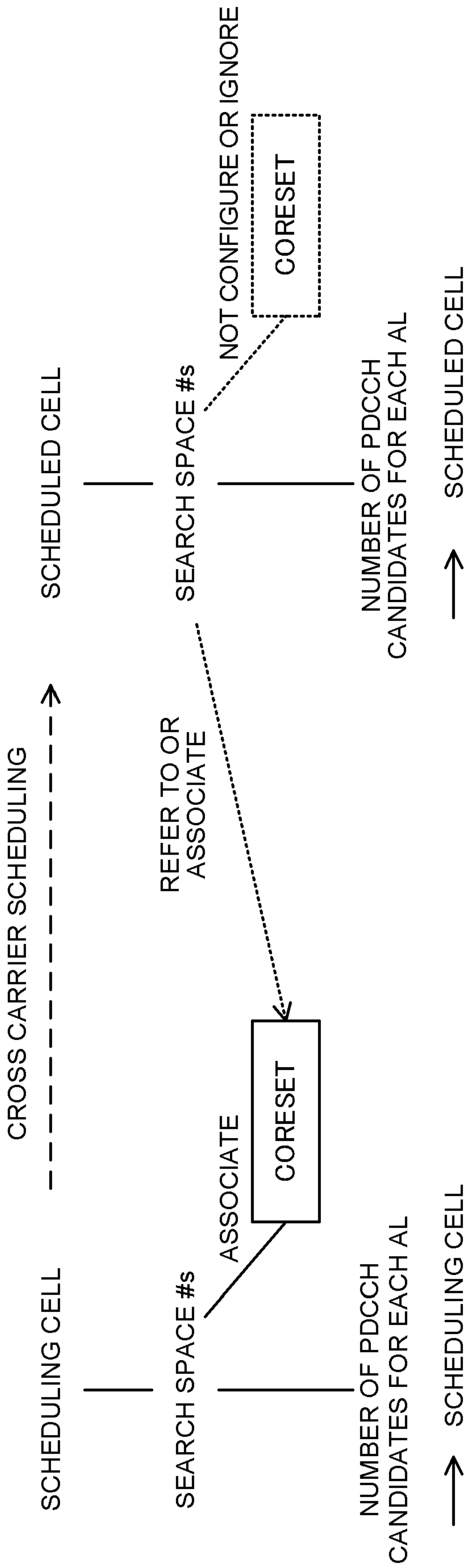
SCHEDULING CELL
SEARCH SPACE #s
ASSOCIATE
CORESET
NUMBER OF PDCCH CANDIDATES FOR EACH AL
→ SCHEDULING CELL
CROSS CARRIER SCHEDULING
REFER TO OR ASSOCIATE
SCHEDULED CELL
SEARCH SPACE #s
NOT CONFIGURE OR IGNORE
CORESET
NUMBER OF PDCCH CANDIDATES FOR EACH AL
→ SCHEDULED CELL

FIG. 4

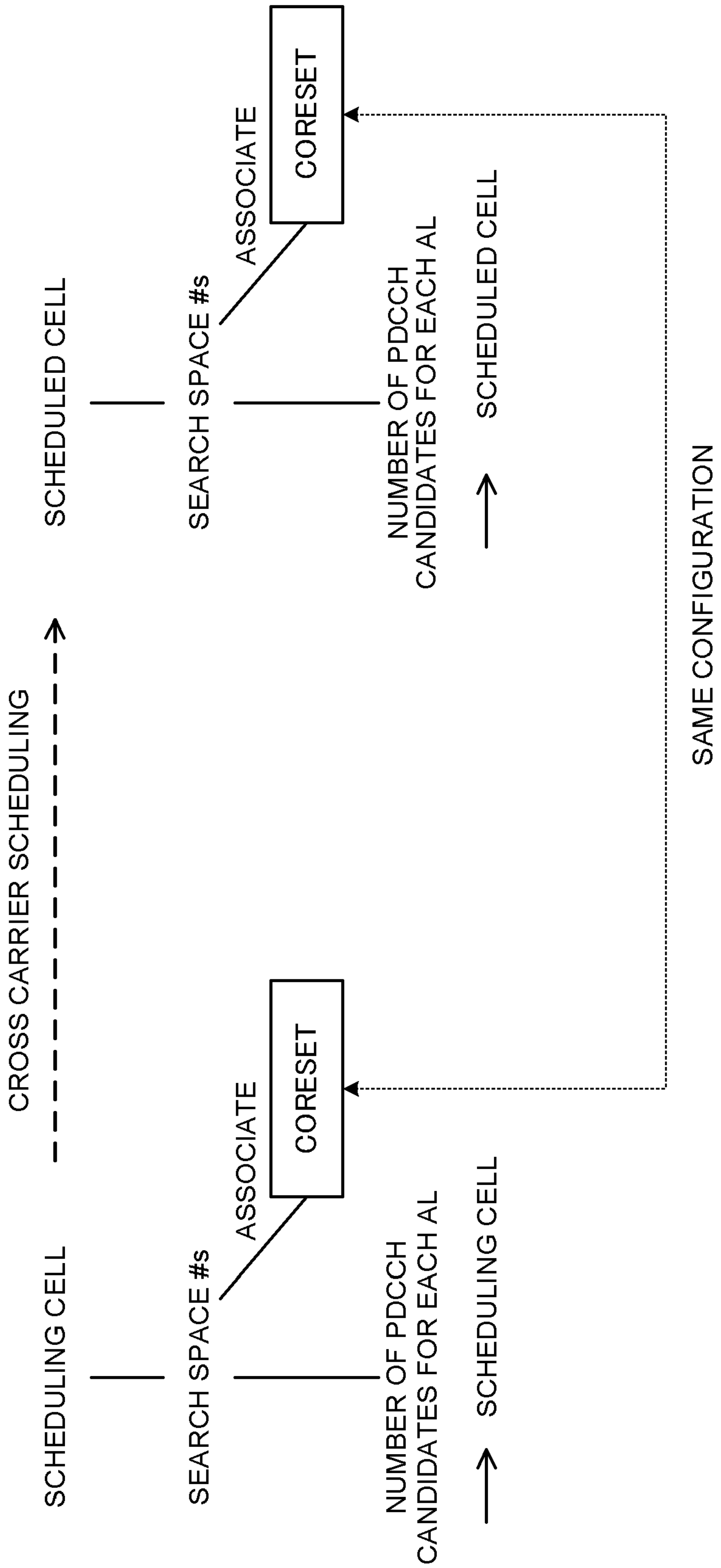
CROSS CARRIER SCHEDULING
SCHEDULING CELL
SEARCH SPACE #s
ASSOCIATE
CORESET
NUMBER OF PDCCH CANDIDATES FOR EACH AL
SCHEDULING CELL
SCHEDULED CELL
SEARCH SPACE #s
ASSOCIATE
CORESET
NUMBER OF PDCCH CANDIDATES FOR EACH AL
SCHEDULED CELL
SAME CONFIGURATION

FIG. 5

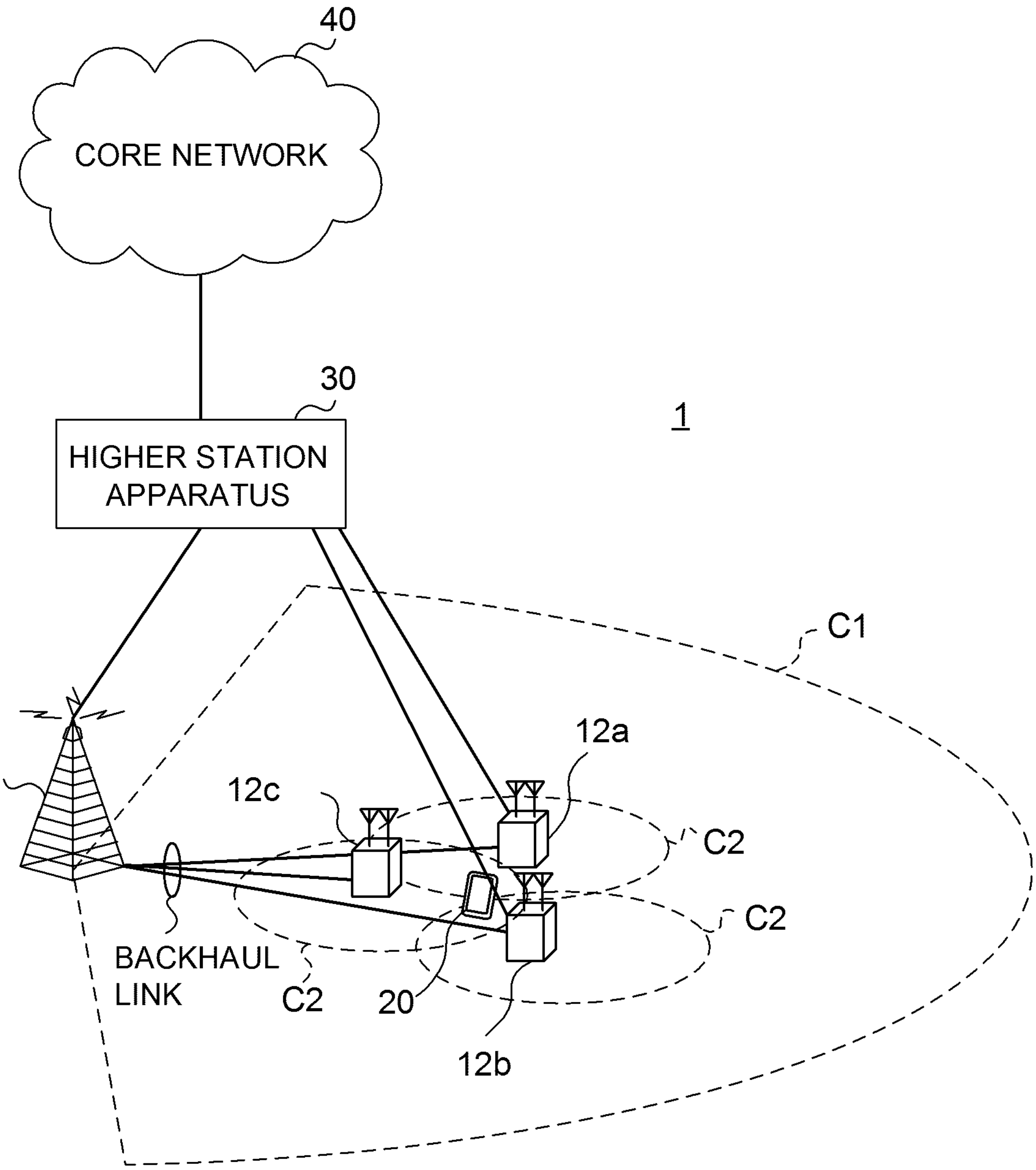
40
CORE NETWORK
30
HIGHER STATION APPARATUS
1
C1
11
12a
12c
C2
C2
BACKHAUL LINK
C2
20
12b

FIG. 6

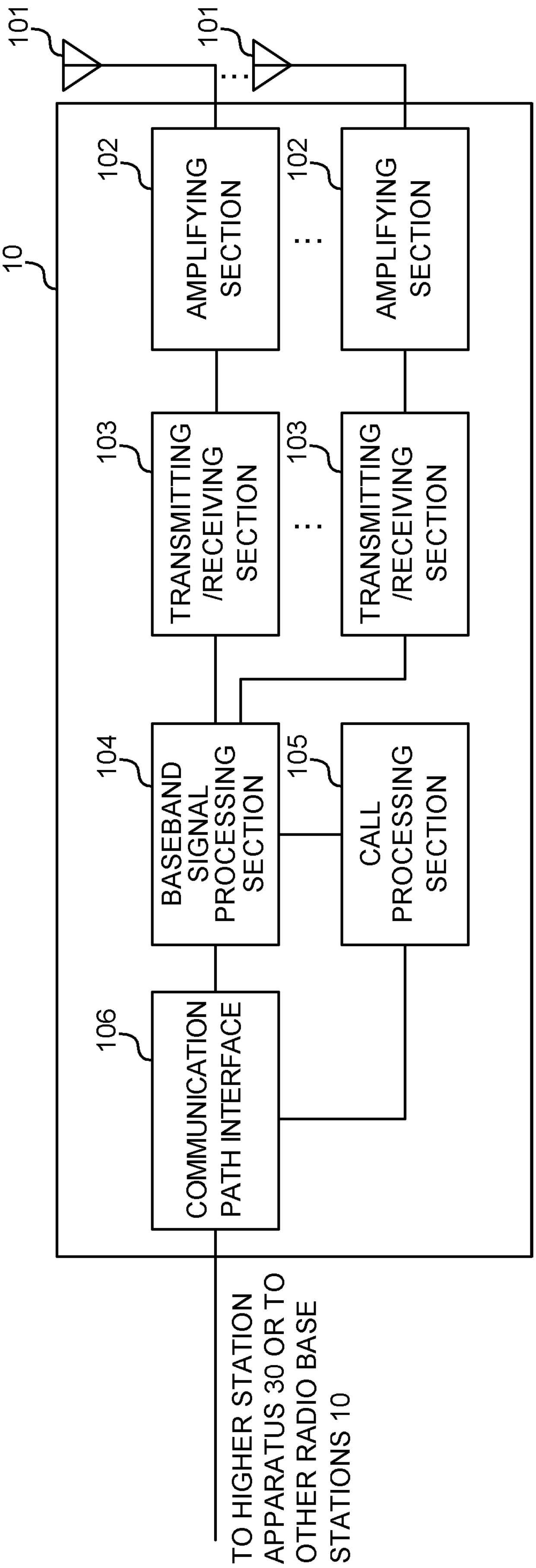
101
101
10
102
AMPLIFYING SECTION
102
AMPLIFYING SECTION
103
TRANSMITTING /RECEIVING SECTION
103
TRANSMITTING /RECEIVING SECTION
104
BASEBAND SIGNAL PROCESSING SECTION
105
CALL PROCESSING SECTION
106
COMMUNICATION PATH INTERFACE
TO HIGHER STATION APPARATUS 30 OR TO OTHER RADIO BASE STATIONS 10

FIG. 7

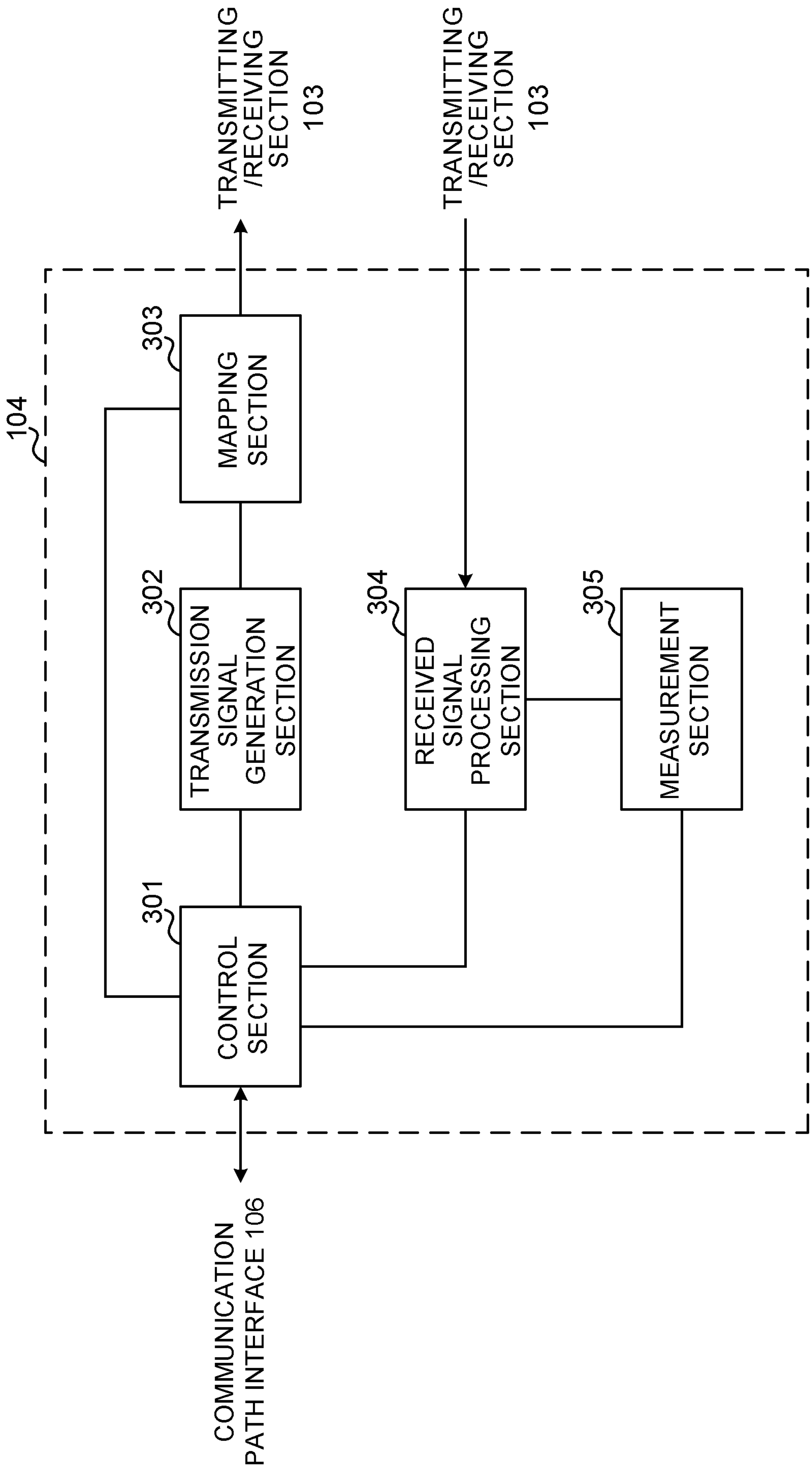
104
301
CONTROL SECTION
302
TRANSMISSION SIGNAL GENERATION SECTION
303
MAPPING SECTION
304
RECEIVED SIGNAL PROCESSING SECTION
305
MEASUREMENT SECTION
TRANSMITTING /RECEIVING SECTION 103
TRANSMITTING /RECEIVING SECTION 103
COMMUNICATION PATH INTERFACE 106

FIG. 8

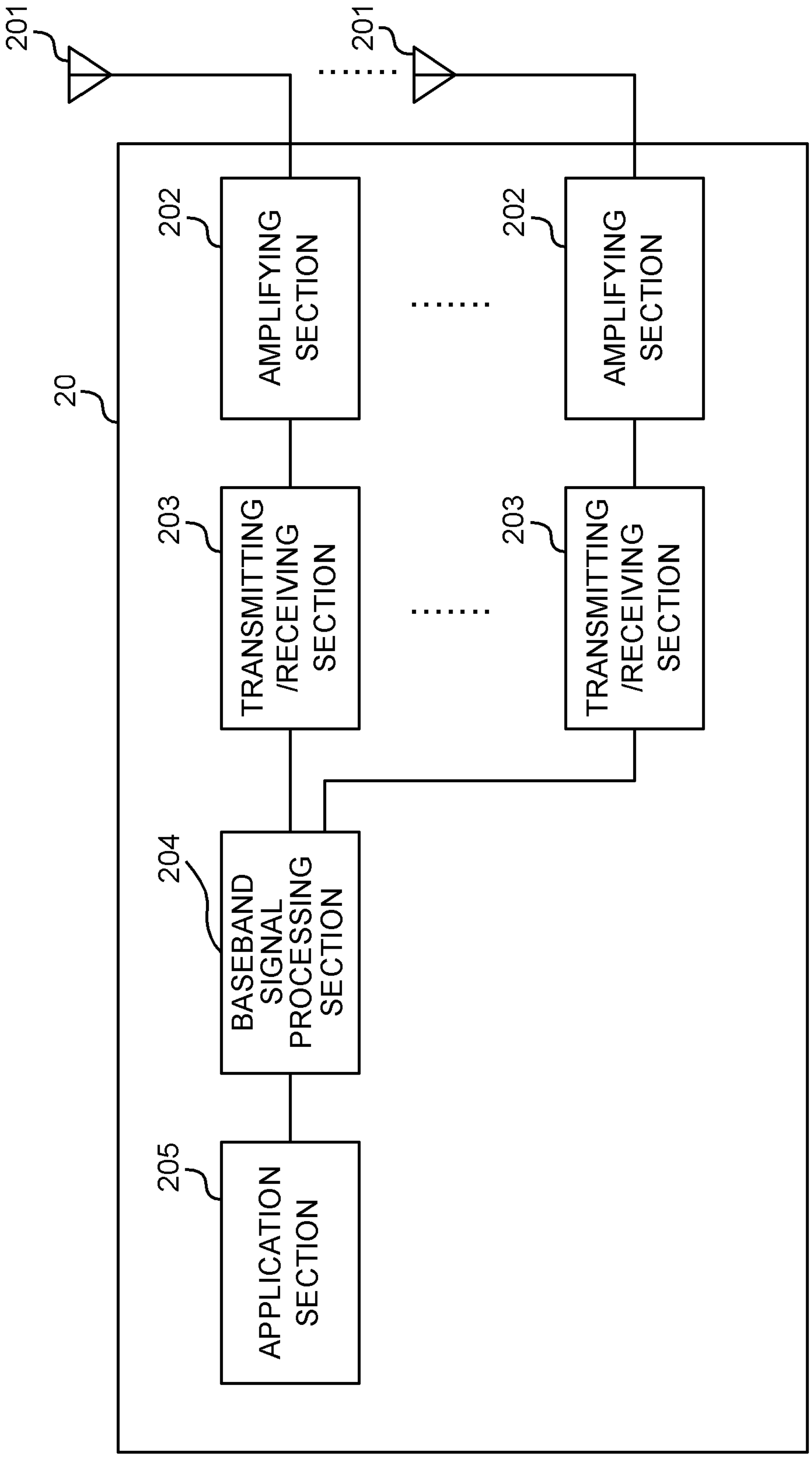
201
201
20
202
AMPLIFYING SECTION
202
AMPLIFYING SECTION
203
TRANSMITTING /RECEIVING SECTION
203
TRANSMITTING /RECEIVING SECTION
204
BASEBAND SIGNAL PROCESSING SECTION
205
APPLICATION SECTION

FIG. 9

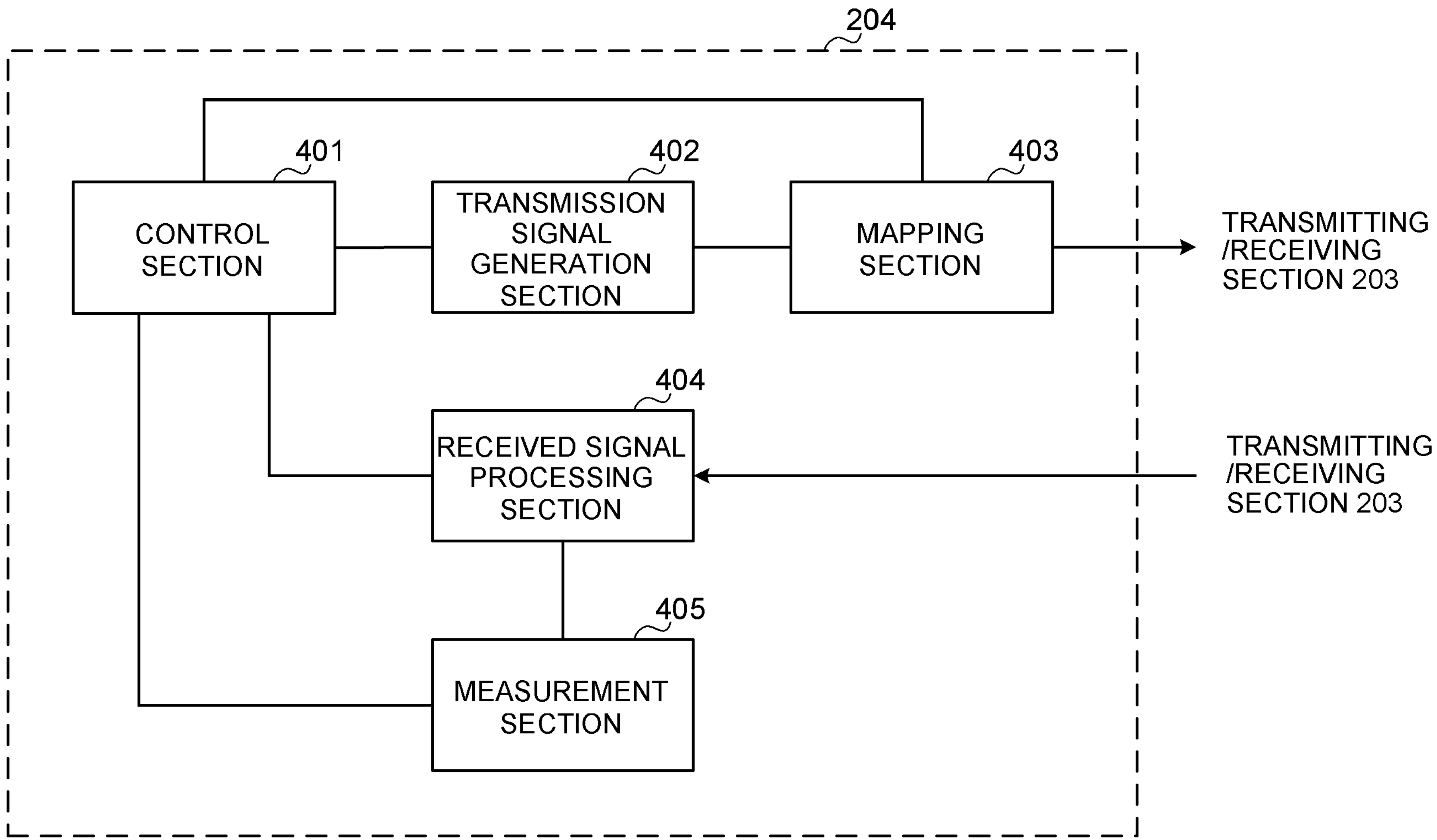
204
401
CONTROL SECTION
402
TRANSMISSION SIGNAL GENERATION SECTION
403
MAPPING SECTION
TRANSMITTING /RECEIVING SECTION 203
404
RECEIVED SIGNAL PROCESSING SECTION
TRANSMITTING /RECEIVING SECTION 203
405
MEASUREMENT SECTION

FIG. 10

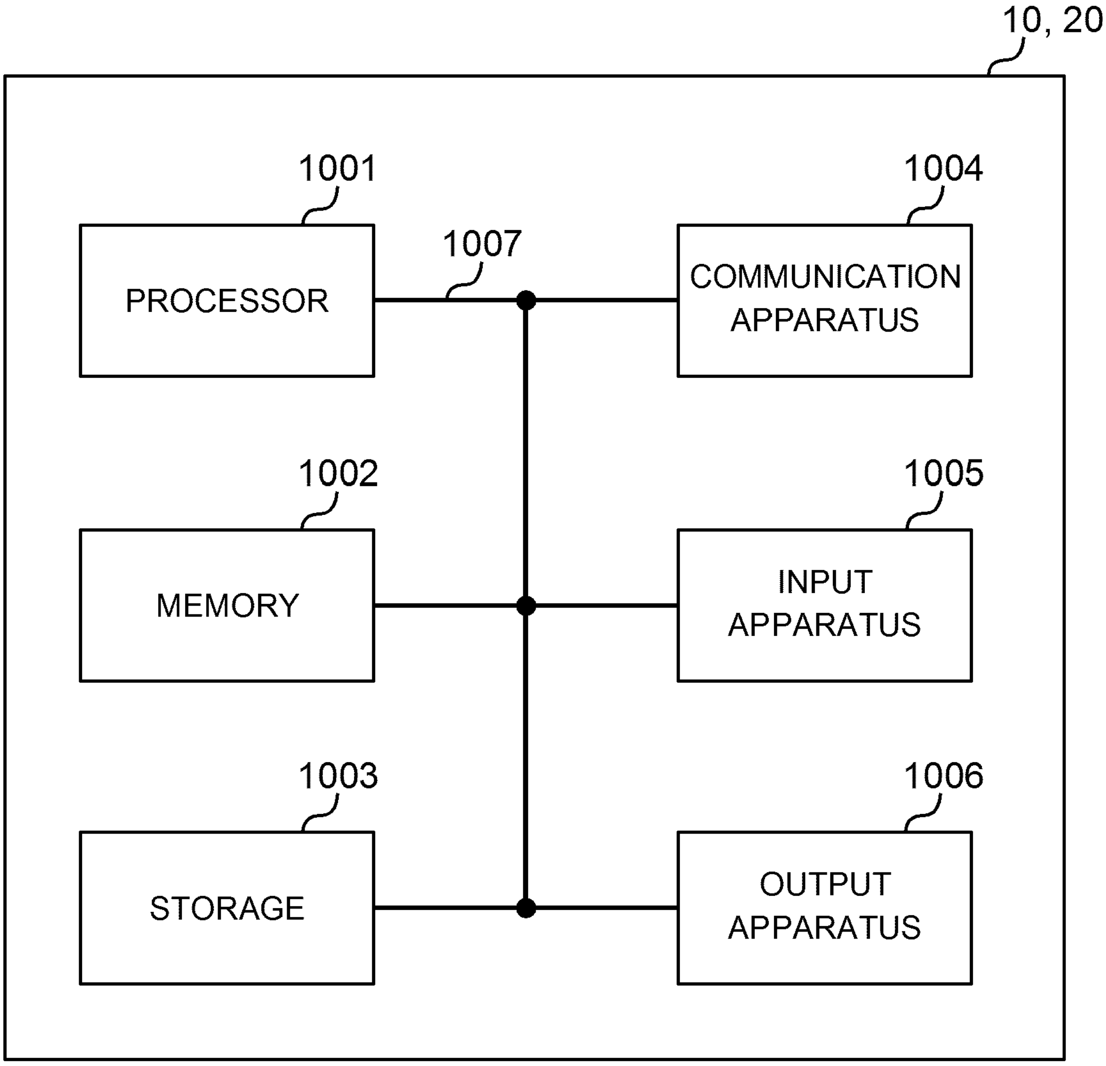
10, 20
1001
PROCESSOR
1007
1004
COMMUNICATION
APPARATUS
1002
MEMORY
1005
INPUT
APPARATUS
1003
STORAGE
1006
OUTPUT
APPARATUS

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010